# FASCICULE DE BREVET EUROPEEN

(11) **EP 3 389 175 B1**
(45) Date de publication et mention de la délivrance du brevet: **15.12.2021**
(21) Numéro de dépôt: 18167075.3
(22) Date de dépôt: 12.04.2018
(51) Int. Cl.: H02M 7/797, H02J 3/18, H02J 3/32, H02J 7/00, H02M 3/335, H02M 3/155, B60L 15/00, H02J 5/00, H02J 3/01, H02M 1/12

(54) **DISPOSITIF DE CONVERSION, PROCÉDÉ DE COMMANDE ET VÉHICULE ASSOCIÉS**
UMWANDLUNGSVORRICHTUNG, ENTSPRECHENDES STEUERVERFAHREN UND ENTSPRECHENDES FAHRZEUG
CONVERSION DEVICE, ASSOCIATED CONTROL METHOD AND VEHICLE

(30) Priorité: 14.04.2017 FR 1753313
(43) Date de publication de la demande: 17.10.2018
(73) Titulaire: IFP Energies nouvelles, 92500 Rueil-Malmaison (FR)
(72) Inventeur: MILIANI, El Hadj, 92500 RUEIL MALMAISON (FR); KEFSI, Laid, 94800 VILLEJUIF (FR)
(74) Mandataire: IFP Energies nouvelles

(56) Documents cités:
- WO-A2-2013/093287
- CN-U- 203 859 524
- FR-A1- 2 937 195
- US-A1- 2015 008 850
- SHUAI JIANG ET AL: "Grid-Connected Boost-Half-Bridge Photovoltaic Microinverter System Using Repetitive Current Control and Maximum Power Point Tracking", IEEE TRANSACTIONS ON POWER ELECTRONICS, vol. 27, no. 11, 1 novembre 2012 (2012-11-01), pages 4711-4722, XP055402795, USA ISSN: 0885-8993, DOI: 10.1109/TPEL.2012.2183389
- H. EL BROUJI ET AL: "Fault tolerant shunt active power filter: topology reconfiguration using optimised fault detection algorithm", RENEWABLE ENERGY AND POWER QUALITY JOURNAL, vol. 1, no. 04, 1 avril 2006 (2006-04-01), pages 333-337, XP055403178, DOI: 10.24084/repqj04.444
- Anonymous: "Have an Electric Car? Here's Some Charging Basics | BodyKraft Ltd", , 7 avril 2015 (2015-04-07), XP055403232, Extrait de l'Internet: URL:http://www.bodykraft.co.uk/have-an-ele ctric-car-heres-some-charging-basics/ [extrait le 2017-09-01]
- ARNALDO ARANCIBIA ET AL: "A Unified Single- and Three-Phase Control for Grid Connected Electric Vehicles", IEEE TRANSACTIONS ON SMART GRID, vol. 4, no. 4, 1 décembre 2013 (2013-12-01), pages 1780-1790, XP055403240, USA ISSN: 1949-3053, DOI: 10.1109/TSG.2013.2271096

## Description

### DOMAINE TECHNIQUE

La présente invention concerne un dispositif de conversion pour véhicule électrique, destiné à transférer de l'énergie électrique entre un réseau continu et au moins un réseau alternatif à N phases, N étant un entier supérieur ou égal à 1. L'invention concerne également un procédé de commande d'un tel dispositif de conversion et un véhicule comportant un tel dispositif.

L'invention s'applique au domaine des convertisseurs électriques, en particulier des convertisseurs électriques pour véhicules électriques ou hybrides.

### ÉTAT DE LA TECHNIQUE ANTÉRIEURE

Un véhicule électrique, respectivement un véhicule hybride, comporte une source d'énergie électrique destinée à fournir de l'énergie nécessaire à actionner un moteur de traction électrique pour assurer la propulsion du véhicule. La source d'énergie est généralement une batterie embarquée destinée à alimenter le moteur de traction à travers un onduleur.

Or, la batterie ne peut stocker qu'une quantité limitée d'énergie, et nécessite donc d'être rechargée régulièrement à partir d'une autre source d'énergie plus puissante, telle qu'un réseau électrique domestique. Durant l'opération de recharge, un chargeur envoie l'énergie du réseau vers la batterie pour la charger.

Le véhicule électrique ou hybride est également susceptible de restituer son énergie stockée au réseau électrique : on parle alors de « V2G » (de l'anglais « *Vehicle to Grid* »*,* signifiant du véhicule au réseau). Dans ce cas, un élément électronique de puissance est fourni pour envoyer cette énergie au réseau électrique.

Toutes ces opérations doivent être réalisées dans le respect des normes de compatibilité électromagnétique et de sécurité, et doivent être commandées par un système de contrôle performant.

En général, ces opérations sont assurées par des dispositifs d'électronique de puissance distincts, comme par exemple, un onduleur, un chargeur, un convertisseur DC-DC.

La multiplicité de tels équipements se traduit par un encombrement élevé, des contraintes thermiques nécessitant un système de refroidissement propre à refroidir l'ensemble de ces équipements, ainsi qu'un coût de fabrication élevé.

Le document WO 2010/057892 A1 décrit un dispositif de conversion pour véhicule électrique dans lequel les fonctions onduleur et chargeur d'un véhicule électrique sont intégrées dans un même organe.

Le document US 2015/008850 décrit un système pour véhicule électrique apte à recharger le véhicule électrique depuis un réseau domestique de courant alternatif.

Le document Shuai Jiang et al., « Grid-connected Boost-Half-Bridge Photovoltaic Microinverter System Using Repetitive Current Control and Maximum Power Point Tracking », IEEE Transactions on Power Electronics, vol 27, n°11, novembre 2012, pages 4711-4722 décrit une architecture de convertisseur boost.

Le document El Brouji et al., « Fault tolerant shunt active power filter: topology reconfiguration using optimised fault détection algorithm », Renewable Energy and Power Quality Journal, vol 1, n°4, avril 2006, pages 333-337 décrit une architecture de filtre actif présentant une tolérance à un courant de défaut.

Néanmoins, un tel dispositif de conversion ne donne pas entière satisfaction.

En effet, un tel dispositif comprend deux branches distinctes pour trois phases, ce qui rend sa fabrication complexe et coûteuse. En outre, un tel dispositif de conversion requiert un moteur électrique spécifique nécessitant un actionnement mécanique particulier pour passer d'un mode de fonctionnement à un autre. En outre, un tel dispositif de conversion ne comporte aucun élément d'isolation galvanique répondant aux normes et susceptible d'empêcher les risques électriques aux personnes et au matériel. En outre, lors de son raccordement au réseau électrique, un tel dispositif de conversion est soumis aux harmoniques portées par chaque phase du réseau électrique. De telles harmoniques sont susceptibles d'augmenter le temps de charge de la batterie, voire de dégrader des composants du dispositif de conversion.

Un but de l'invention est donc de proposer un dispositif de conversion présentant un encombrement et un coût de fabrication plus faibles que les dispositifs de conversion de l'état de la technique, tout en présentant un fonctionnement plus simple et sécurisé, et une sensibilité moindre aux harmoniques transportées par le réseau électrique lors du raccordement dudit dispositif de conversion au réseau électrique.

### EXPOSÉ DE L'INVENTION

A cet effet, l'invention a pour objet un dispositif de conversion tel que défini à la revendication 1.

En effet, grâce à un tel dispositif de conversion, aucun actionnement mécanique n'est requis pour passer d'un mode de fonctionnement à un autre. Le fonctionnement d'un tel dispositif de conversion est donc simplifié.

En outre, dans un tel dispositif de conversion, un unique circuit est propre à réaliser les diverses opérations de conversion, ce qui se traduit par un encombrement moindre et un coût de fabrication plus faible que les dispositifs de conversion de l'état de la technique. Une telle intégration de fonctions conduit en outre à l'utilisation d'un unique circuit de refroidissement, ce qui réduit davantage l'encombrement dû au dispositif de conversion.

En outre, la présence du transformateur assure une isolation galvanique entre les éléments à courant continu et les éléments à courant alternatif, ce qui a pour effet de limiter les risques électriques aux personnes et au matériel.

En outre, grâce à la présence du filtre actif, il est possible de réduire les problèmes évoqués précédemment liés aux harmoniques transportées par le réseau de distribution.

Une telle architecture est particulièrement avantageuse dans le cas des véhicules dits à forte puissance. En effet, dans un tel cas, il est possible d'utiliser un même organe du dispositif de conversion selon l'invention successivement comme un filtre actif ou comme un convertisseur réversible DC-AC pour alimenter un moteur en courant alternatif. Ceci se traduit par un encombrement et un poids moindres, ainsi qu'un coût de fabrication plus faible qu'avec des dispositifs de conversion usuels.

En outre, dans le dispositif de conversion objet de l'invention, lors d'une étape de traction, la première borne du filtre actif est connectée à la première borne haute tension du convertisseur DC-DC, et la deuxième borne du filtre actif est connectée à la deuxième borne haute tension du convertisseur DC-DC,
et le contrôleur est configuré pour, lors de l'étape de traction :
- piloter les modules de commutation du convertisseur DC-DC selon une loi de commande de convertisseur boost configuré pour transférer de l'énergie électrique depuis la branche basse tension vers la branche haute tension ;
- piloter le convertisseur réversible DC-AC selon une loi de commande d'onduleur configuré pour transférer de l'énergie depuis la branche haute tension vers les points de connexion du convertisseur réversible DC-AC ;
- piloter le filtre actif selon une loi de commande d'onduleur configuré pour transférer de l'énergie depuis la branche haute tension vers les points de connexion du filtre actif.

Ceci confère au filtre actif la faculté de venir en appoint du convertisseur réversible DC-AC lors de son fonctionnement, en particulier lors de l'étape de traction. Ainsi, il est possible de construire le convertisseur réversible DC-AC avec des composants électroniques qui rendent ledit convertisseur réversible DC-AC moins volumineux et moins cher qu'un convertisseur réversible DC-AC d'un dispositif de conversion qui serait dépourvu d'un filtre actif propre à fonctionner comme décrit précédemment, et qui serait dimensionné pour présenter des caractéristiques en courant et en tension similaires à l'association du convertisseur réversible DC-AC et du filtre actif.

D'autres aspects avantageux de l'invention sont définis dans les revendications dépendantes.

En outre, l'invention a pour objet un procédé de commande d'un dispositif de conversion tel que défini à la revendication 5.

D'autres aspects avantageux de l'invention sont définis dans les revendications dépendantes.

En outre, l'invention a pour objet un véhicule électrique ou hybride tel que défini à la revendication 8.

D'autres aspects avantageux de l'invention sont définis dans la revendication dépendante.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- la figure 1 est une représentation schématique d'un exemple d'une chaîne d'électrification pour véhicule électrique ou hybride, la chaîne d'électrification coopérant avec un moteur électrique. Cet exemple n'est pas conforme à l'invention et n'est représenté qu'à titre d'illustration ; et
- la figure 2 est une représentation schématique d'un exemple de chaîne d'électrification pour véhicule électrique ou hybride selon l'invention, la chaîne d'électrification coopérant avec deux moteurs électriques distincts.

### EXPOSÉ DÉTAILLÉ DE MODES DE RÉALISATION PARTICULIERS

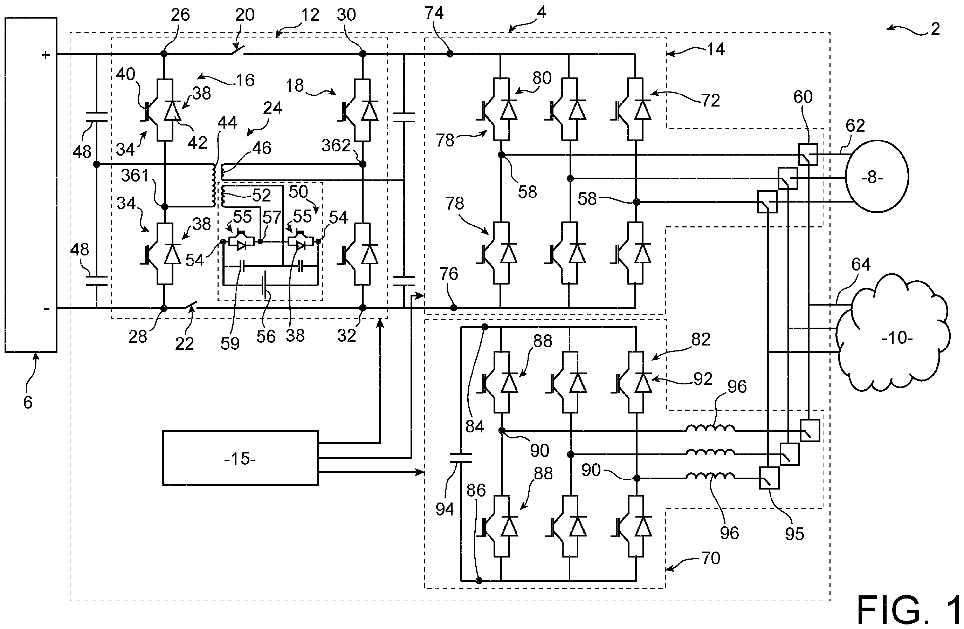

Un exemple d'une chaîne d'électrification 2 est représenté sur la figure 1. Cet exemple n'est pas conforme à l'invention et n'est présenté qu'à titre d'illustration.

La chaîne d'électrification 2 est notamment destinée à être embarquée à bord d'un véhicule électrique ou hybride, par exemple une voiture électrique ou hybride. En particulier, la chaîne d'électrification 2 est destinée à être embarquée à bord d'un véhicule comprenant un unique moteur électrique 8. De tels véhicules sont dits à faible ou à moyenne puissance, la puissance fournie par le moteur électrique 8 étant généralement comprise entre 10 kW (kilowatt) et 100 kW.

La chaîne d'électrification 2 comprend un dispositif de conversion 4, configuré pour transférer de l'énergie électrique entre un réseau continu et au moins un réseau alternatif à N phases, N étant un entier supérieur ou égal à 1.

Le réseau continu est constitué par une batterie 6.

Le réseau alternatif est constitué par le moteur électrique 8 ou par un réseau 10 de distribution de courant alternatif.

Le dispositif de conversion 4 comporte un convertisseur DC-DC 12, un convertisseur AC-DC 14 et un contrôleur 15. Le dispositif de conversion 4 comporte, en outre, un filtre actif 70.

Le convertisseur DC-DC 12 est configuré pour convertir une première tension électrique continue en une deuxième tension continue différente.

Le convertisseur réversible DC-AC 14 est configuré pour convertir une tension électrique continue en une tension électrique alternative, c'est-à-dire en convertisseur DC-AC et pour convertir une tension électrique alternative en une tension électrique continue, c'est-à-dire en convertisseur AC-DC.

Le filtre actif 70 est, notamment, configuré pour atténuer des harmoniques transportées par le réseau de distribution 10 afin de réduire la distorsion du courant transporté par le réseau de distribution.

Le convertisseur DC-DC 12 comporte une branche basse tension 16, une branche haute tension 18, un premier interrupteur 20, un deuxième interrupteur 22 et un transformateur 24.

La branche basse tension 16 est connectée entre une première borne basse tension 26 et une deuxième borne basse tension 28. En outre, la branche haute tension 18 est connectée entre une première borne haute tension 30 et une deuxième borne haute tension 32.

Comme cela apparaît sur la figure 1, le convertisseur DC-DC 12 est connecté à la batterie 6 par l'intermédiaire de la première borne basse tension 26 et de la deuxième borne basse tension 28.

La branche basse tension 16 et la branche haute tension 18 comprennent chacune deux sous-branches 34 en série, connectées entre elles en un point milieu 361, 362, respectivement.

Chaque sous-branche 34 comporte un module de commutation 38 propre à commuter entre un état bloqué empêchant la circulation d'un courant électrique, et un état passant permettant la circulation d'un courant électrique.

Par exemple, chaque module de commutation 38 comprend un transistor 40 et une diode 42 en parallèle, la diode étant montée en inverse par rapport au transistor 40. Par exemple, le transistor 40 est un transistor MOSFET ou un transistor IGBT.

Le premier interrupteur 20 est connecté entre la première borne basse tension 26 et la première borne haute tension 30. En outre, le deuxième interrupteur 22 est connecté entre la deuxième borne basse tension 28 et la deuxième borne haute tension 32.

Le premier interrupteur 20 et le deuxième interrupteur 22 sont chacun propres à commuter entre un état bloqué empêchant la circulation d'un courant électrique, et un état passant permettant la circulation d'un courant électrique.

Le transformateur 24 comprend un enroulement primaire 44 et un enroulement secondaire 46 magnétiquement couplés entre eux.

L'enroulement primaire 44 est connecté, par l'une de ses extrémités, au point milieu 361 de la branche basse tension 16, et par l'autre de ses extrémités à une référence de tension primaire.

Par exemple, et comme illustré par la figure 1, la référence de tension primaire est constituée par un point milieu entre deux condensateurs 48 en série, connectés en parallèle de la branche basse tension 16, entre la première borne basse tension 26 et la deuxième borne basse tension 28.

L'enroulement secondaire 46 est connecté, par l'une de ses extrémités, au point milieu 362 de la branche haute tension 18, et par l'autre de ses extrémités à une référence de tension secondaire.

Par exemple, et comme illustré par la figure 1, la référence de tension secondaire est constituée par un point milieu entre deux condensateurs 48 en série, connectés en parallèle de la branche haute tension 18, entre la première borne haute tension 30 et la deuxième borne haute tension 32.

Avantageusement, le convertisseur DC-DC 12 comprend, en outre, une branche auxiliaire 50 et un enroulement auxiliaire 52.

La branche auxiliaire 50 s'étend entre deux bornes de connexion 54, et comprend deux sous-branches 55 en série connectées entre elles en un point milieu 57. Chaque sous-branche 55 de la branche auxiliaire 50 est similaire aux sous-branches 34 de la branche basse tension 16 ou de la branche haute tension 18.

L'enroulement auxiliaire 52 est magnétiquement couplé à l'enroulement primaire 44 et à l'enroulement secondaire 46 du transformateur 24. En outre, l'enroulement auxiliaire 52 est connecté, par l'une de ses extrémités, au point milieu 57 de la branche auxiliaire 50, et par l'autre de ses extrémités à une référence de tension auxiliaire.

Par exemple, et comme illustré par la figure 1, la référence de tension auxiliaire est constituée par un point milieu entre deux condensateurs 59 en série, connectés en parallèle de la branche auxiliaire 50, entre les deux bornes de connexion 54.

Comme illustré par la figure 1, un accumulateur 56 est connecté aux bornes de connexion 54 de la branche auxiliaire 50.

Le convertisseur AC-DC 14 comporte N branches 72.

Chaque branche 72 est connectée entre une première borne 74 et une deuxième borne 76 du convertisseur AC-DC 14.

Chaque branche 72 comprend deux sous-branches 78 en série, connectées entre elles en un point de connexion 58.

Chaque sous-branche 78 comporte un module de commutation 80 propre à commuter entre un état bloqué empêchant la circulation d'un courant électrique, et un état passant permettant la circulation d'un courant électrique.

Par exemple, les modules de commutation 80 du convertisseur AC-DC 14 présentent une architecture similaire à l'architecture des modules de commutation 38 du convertisseur DC-DC 12.

Comme cela apparaît sur la figure 1, chaque point de connexion 58 du convertisseur AC-DC 14 est raccordé à un commutateur 60 correspondant.

Chaque commutateur 60 est propre à être commandé pour raccorder sélectivement un point de connexion 58 associé du convertisseur AC-DC 14 soit à une phase correspondante du moteur 8, soit à une phase correspondante du réseau de distribution 10, lorsque le véhicule est raccordé au réseau de distribution 10.

En outre, le convertisseur réversible DC-AC 14 est connecté au convertisseur DC-DC au niveau de la première borne haute tension 30 et de la deuxième borne haute tension 32. Plus précisément, la première borne 74 du convertisseur AC-DC 14 est connectée à la première borne haute tension 30, et la deuxième borne 76 du convertisseur AC-DC 14 est connectée à la deuxième borne haute tension 32.

Le convertisseur réversible DC-AC 14 présente une architecture permettant un fonctionnement en onduleur, en redresseur ou en pont en H.

Le filtre actif 70 comporte N branches 82.

Chaque branche 82 est connectée entre une première borne 84 et une deuxième borne 86 du filtre actif 70.

Chaque branche 82 comprend deux sous-branches 88 en série, connectées entre elles en un point de connexion 90.

Chaque sous-branche 88 comporte un module de commutation 92 propre à commuter entre un état bloqué empêchant la circulation d'un courant électrique, et un état passant permettant la circulation d'un courant électrique.

Par exemple, les modules de commutation 92 du filtre actif 70 présentent une architecture similaire à l'architecture des modules de commutation 38 du convertisseur DC-DC 12.

Il apparaît que le filtre actif 70 présente une architecture similaire à l'architecture du convertisseur réversible DC-AC 14.

De préférence, le filtre actif 70 comporte également un condensateur94 connecté entre la première borne 84 et la deuxième borne 86 du filtre actif 70, en parallèle de chaque branche 82.

Comme cela apparaît sur la figure 1, chaque point de connexion 90 du filtre actif 70 est raccordé à un commutateur 95 correspondant.

Chaque commutateur 95 est propre à être commandé pour connecter un point de connexion 90 associé du filtre actif 70 à une phase correspondante du réseau de distribution 10, ou pour déconnecter le point de connexion 90 associé de la phase correspondante du réseau de distribution 10.

De préférence, chaque point de connexion 90 du filtre actif 70 est raccordé au commutateur 95 correspondant par l'intermédiaire d'un composant inductif 96 associé. Dans une configuration classique de l'invention le composant inductif 96 est une bobine.

Le contrôleur 15 est configuré pour piloter l'état passant ou bloqué du premier interrupteur 20, du deuxième interrupteur 22 et de chaque module de commutation 38. On notera que le contrôleur 15 est configuré pour, en fonctionnement du dispositif de conversion 4, commander le premier interrupteur 20 et le deuxième interrupteur 22 pour qu'ils soient dans un état bloqué.

Bien entendu, une telle configuration du contrôleur 15 n'empêche nullement le contrôleur de présenter une configuration, telle qu'une configuration de maintenance ou de test du dispositif de conversion 4, dans laquelle le contrôleur est configuré pour commander le premier interrupteur 20 et le deuxième interrupteur 22 pour qu'ils soient dans un état passant.

Le contrôleur 15 est, en outre, configuré pour piloter le convertisseur réversible DC-AC 14 pour faire fonctionner le convertisseur réversible DC-AC 14 en onduleur, en redresseur ou en pont en H.

Le contrôleur 15 est également propre à mesurer un courant électrique circulant dans chaque phase du réseau de distribution 10.

En outre, le contrôleur 15 est configuré pour piloter les modules de commutation 92 du filtre actif 70 en fonction de la valeur mesurée du courant électrique circulant dans chaque phase du réseau de distribution 10, notamment pour réduire des harmoniques, par exemple des harmoniques de courant, transportées par le réseau de distribution 10.

En particulier, le contrôleur 15 est configuré pour commander, au cours du temps, l'état de chaque module de commutation 92 du filtre actif 70 pour injecter, dans la phase du réseau de distribution 10 correspondante, un courant électrique dont la valeur dépend de la valeur mesurée du courant électrique circulant dans ladite phase. Plus précisément, le contrôleur 15 est configuré pour commander, au cours du temps, l'état de chaque module de commutation 92 du filtre actif 70 pour injecter, dans la phase du réseau de distribution 10 correspondante, un courant électrique dont la valeur dépend de la valeur mesurée des harmoniques du courant électrique circulant dans ladite phase, c'est-à-dire de la valeur mesurée de la distorsion du courant électrique circulant dans ladite phase.

Le fonctionnement de la chaîne d'électrification 2 va maintenant être décrit.

Lors d'une étape de traction, durant laquelle de l'énergie doit être transférée depuis la batterie 6 vers le moteur électrique 8, le contrôleur 15 commande les commutateurs 60 pour raccorder chaque point de connexion 58 du convertisseur réversible DC-AC 14 à une phase 62 correspondante du moteur électrique 8.

Le contrôleur 15 commande également le premier interrupteur 20 et le deuxième interrupteur 22 pour qu'ils soient dans un état bloqué.

En outre, le contrôleur 15 pilote les modules de commutation 38 du convertisseur DC-DC 12 selon une loi de commande de convertisseur boost connue pour transférer de l'énergie électrique depuis la batterie 6 vers la branche haute tension 18. Le contrôleur 15 pilote également le convertisseur réversible DC-AC 14 selon une loi de commande d'onduleur connue pour transférer de l'énergie depuis la branche haute tension 18 vers le moteur électrique 8.

En outre, le contrôleur 15 commande chaque commutateur 95 pour que chaque branche 82 du filtre actif 70 soit déconnectée du réseau de distribution 10.

Lors d'une étape de restitution d'énergie, encore appelée « V2G », durant laquelle de l'énergie électrique doit être transférée depuis la batterie 6 vers le réseau de distribution 10, le contrôleur 15 commande les commutateurs 60 pour raccorder chaque point de connexion 58 du convertisseur réversible DC-AC 14 à une phase 64 correspondante du réseau de distribution 10.

Le contrôleur 15 commande également le premier interrupteur 20 et le deuxième interrupteur 22 pour qu'ils soient dans un état bloqué.

En outre, le contrôleur 15 pilote les modules de commutation 38 du convertisseur DC-DC 12 selon une loi de commande de convertisseur boost connue pour transférer de l'énergie électrique depuis la batterie 6 vers la branche haute tension 18. Le contrôleur 15 pilote également le convertisseur réversible DC-AC 14 selon une loi de commande d'onduleur pour transférer de l'énergie depuis la branche haute tension 18 vers le réseau de distribution 10.

En outre, le contrôleur 15 commande chaque commutateur 95 pour que chaque branche 82 du filtre actif 70 soit déconnectée du réseau de distribution 10.

Lors d'une étape de charge rapide, durant laquelle de l'énergie doit être transférée depuis toutes les phases 64 du réseau de distribution 10 vers la batterie 6 pour charger la batterie 6, le contrôleur 15 commande les commutateurs 60 pour raccorder chaque point de connexion 58 du convertisseur réversible DC-AC 14 à une phase 64 correspondante du réseau de distribution 10.

Le contrôleur 15 commande également le premier interrupteur 20 et le deuxième interrupteur 22 pour qu'ils soient dans un état bloqué.

En outre, le contrôleur 15 pilote le convertisseur réversible DC-AC 14 selon une loi de commande de redresseur connue pour transférer de l'énergie depuis le réseau de distribution 10 vers la branche haute tension 18. Le contrôleur 15 pilote également les modules de commutation 38 du convertisseur DC-DC 12 selon une loi de commande de convertisseur buck connue pour transférer de l'énergie électrique depuis la branche haute tension 18 vers la batterie 6.

Lors d'une étape de charge lente, durant laquelle de l'énergie doit être transférée depuis au plus N-1 phases 64, par exemple deux phases 64, du réseau de distribution 10 vers la batterie 6 pour charger la batterie 6, le contrôleur 15 commande les commutateurs 60 pour raccorder les dites N-1 phases, par exemple les deux phases 64, au point de connexion 58 correspondant du convertisseur réversible DC-AC 14, dit « point de connexion actif ». Les autres points de connexion 58 du convertisseur réversible DC-AC 14 ne sont pas connectés. Dans ce cas, le nombre total N de phases est strictement supérieur à 1.

Le contrôleur 15 commande également le premier interrupteur 20 et le deuxième interrupteur 22 pour qu'ils soient dans un état bloqué, de sorte que le transformateur 24 est utilisé pour l'isolation galvanique.

En outre, le contrôleur 15 pilote le convertisseur réversible DC-AC 14 selon une loi de commande de redresseur ou de pont en H connue pour transférer de l'énergie depuis le réseau de distribution 10 vers la batterie 6.

En outre, le contrôleur 15 pilote les modules de commutation 38 du convertisseur DC-DC 12 selon une loi de commande de convertisseur buck configuré pour transférer de l'énergie électrique depuis la branche haute tension 18 vers la branche basse tension.16

En outre, le contrôleur 15 commande chaque commutateur 95 pour que chaque branche 82 du filtre actif 70 soit connectée au réseau de distribution 10.

Le contrôleur mesure également le courant électrique circulant dans chaque phase du réseau de distribution 10. En outre, le contrôleur 15 pilote chaque module de commutation 92 du filtre actif 70 pour injecter, dans chaque phase du réseau de distribution 10, un courant électrique dont la valeur au cours du temps dépend de la valeur mesurée des harmoniques du courant électrique circulant dans ladite phase, c'est-à-dire de la valeur mesurée de la distorsion du courant électrique circulant dans ladite phase.

Lors d'une étape de charge auxiliaire, durant laquelle de l'énergie électrique doit être transférée depuis la batterie 6 vers l'accumulateur 56, le contrôleur 15 commande le premier interrupteur 20 et le deuxième interrupteur 22 pour qu'ils soient dans un état bloqué.

En outre, le contrôleur 15 pilote les modules de commutation 38 du convertisseur DC-DC 12 et de la branche auxiliaire 50 selon une loi de commande de convertisseur buck connue pour transférer de l'énergie électrique depuis la batterie 6 vers l'accumulateur 56.

Grâce à une telle chaîne d'électrification 2, les effets potentiellement néfastes des harmoniques transportées par le réseau de distribution 10, notamment sur les composants de la chaîne d'électrification 2 et sur le rendement de la chaîne d'électrification, sont réduits.

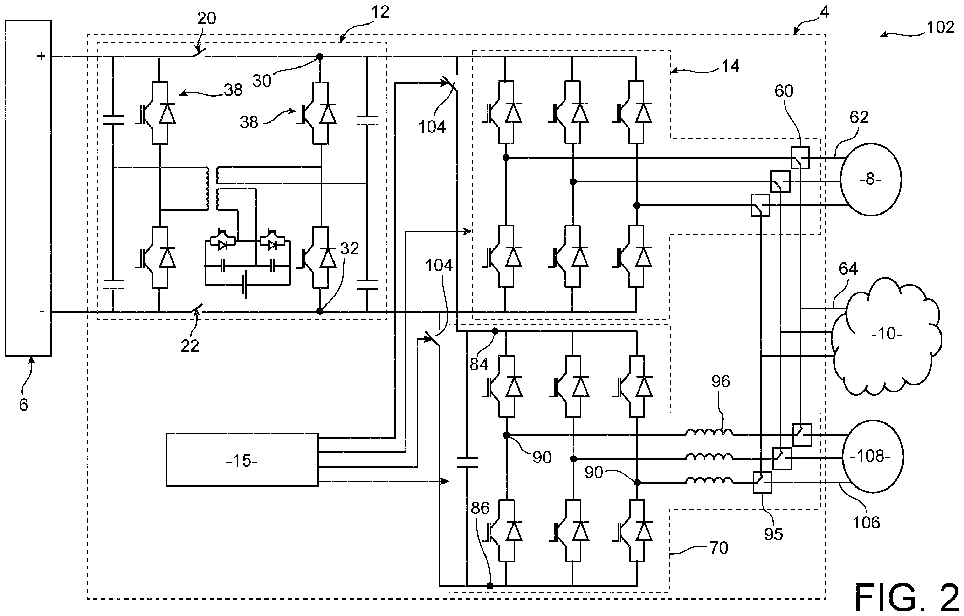

Un mode de réalisation d'une chaîne d'électrification 102 selon l'invention est représenté sur la figure 2. La chaîne d'électrification 102 est notamment destinée à être embarquée à bord d'un véhicule électrique ou hybride préférentiellement du type à forte puissance, par exemple une voiture électrique ou hybride. En particulier, la chaîne d'électrification 2 est destinée à être embarquée à bord d'un véhicule comprenant au moins un premier moteur électrique 8 et un deuxième moteur électrique 108.

Dans ce cas, chacun parmi le premier moteur électrique 8 et le deuxième moteur électrique 108 forme un réseau alternatif distinct.

De tels véhicules sont dits à forte puissance, la puissance fournie par l'ensemble des moteurs électriques 8, 108 étant généralement supérieure 100 kW, par exemple comprise entre 100 kW et 250 kW.

La chaîne d'électrification 102 de la figure 2 diffère de la chaîne d'électrification 2 de la figure 1 en ce que chaque commutateur 95 est propre à être commandé pour raccorder sélectivement un point de connexion 90 correspondant du filtre actif soit à une phase correspondante du deuxième moteur 108, soit à une phase correspondante du réseau de distribution 10.

En outre, la chaîne d'électrification 102 de la figure 2 se distingue de la chaîne d'électrification 2 de la figure 1 en ce que la première borne 84 du filtre actif 70 est connectée à la première borne haute tension 30 du convertisseur DC-DC 12, et en ce que la deuxième borne 86 du filtre actif 70 est connectée à la deuxième borne haute tension 32 du convertisseur DC-DC 12.

Par exemple, la première borne 84 du filtre actif 70 est connectée à la première borne haute tension 30 du convertisseur DC-DC 12 par le biais d'un interrupteur 104.

Par exemple, la deuxième borne 86 du filtre actif 70 est connectée à la deuxième borne haute tension 32 du convertisseur DC-DC 12 par le biais d'un interrupteur 104.

Le fonctionnement de la chaîne d'électrification 102 va maintenant être décrit.

Lors de l'étape de traction, durant laquelle de l'énergie doit être transférée depuis la batterie 6 vers le moteur électrique 8 et vers le moteur 108, le contrôleur 15 commande :
- les commutateurs 60 pour raccorder chaque point de connexion 58 du convertisseur réversible DC-AC 14 à une phase 62 correspondante du premier moteur électrique 8 ; et
- les commutateurs 95 pour raccorder chaque point de connexion 90 du filtre actif 70 à une phase 106 correspondante du deuxième moteur électrique 108.

Le contrôleur 15 commande également le premier interrupteur 20 et le deuxième interrupteur 22 pour qu'ils soient dans un état bloqué.

Le contrôleur 15 commande également les interrupteurs 104 pour qu'ils soient dans un étant passant, c'est-à-dire pour que la première borne 84, respectivement la deuxième borne 86, du filtre actif 70 soit électriquement connectée à la première borne haute tension 30, respectivement la deuxième borne haute tension 32, du convertisseur DC-DC 12.

En outre, le contrôleur 15 pilote les modules de commutation 38 du convertisseur DC-DC 12 selon une loi de commande de convertisseur boost connue pour transférer de l'énergie électrique depuis la batterie 6 vers la branche haute tension 18.

Le contrôleur 15 pilote également le convertisseur réversible DC-AC 14 selon une loi de commande d'onduleur connue pour transférer de l'énergie depuis la branche haute tension 18 vers le premier moteur électrique 8.

Le contrôleur 15 pilote également le filtre actif 70 selon une loi de commande d'onduleur connue pour transférer de l'énergie depuis la branche haute tension 18 vers le deuxième moteur électrique 8. Ceci est rendu possible par le fait que le filtre actif 70 présente une architecture bidirectionnelle similaire à l'architecture du convertisseur réversible DC-AC 14.

Le fonctionnement de la chaîne d'électrification 102 lors de l'étape de restitution d'énergie diffère du fonctionnement de la chaîne d'électrification 2 uniquement en ce que le contrôleur commande :
- les interrupteurs 104 pour qu'ils soient dans un état bloqué, c'est-à-dire pour que la première borne 84, respectivement la deuxième borne 86, du filtre actif 70 soit électriquement déconnectée de la première borne haute tension 30, respectivement la deuxième borne haute tension 32, du convertisseur DC-DC 12 ; et
- les commutateurs 95 pour que les points de connexion 90 du filtre actif 70 ne soient pas connectés au réseau de distribution 10.

En outre, pour chacune des étapes de charge rapide, de charge lente et de charge auxiliaire, le fonctionnement de la chaîne d'électrification 102 est similaire au fonctionnement de la chaîne d'électrification 2 durant l'étape considérée.

En particulier, pour chacune des étapes de charge rapide, de charge lente et de charge auxiliaire, le contrôleur 15 dans la chaîne d'électrification 102 commande :
- les interrupteurs 104 pour qu'ils soient dans un état bloqué ; et
- les commutateurs 95 pour raccorder chaque point de connexion 90 du filtre actif 70 à la phase 64 correspondante du réseau de distribution 10.

Il est évident que les fonctions réalisées par le contrôleur 15 sont susceptibles d'être réalisées par une pluralité d'unités de contrôle distinctes, lesdites unités de contrôle formant alors le contrôleur 15.

Dans le mode de réalisation décrit ci-dessus le dispositif de conversion 4 comporte un premier et un deuxième interrupteur 20, 22. Néanmoins, de tels interrupteurs 20, 22 ne sont pas nécessaires pour le fonctionnement du dispositif de conversion 4 selon l'invention puisque ceux-ci sont maintenus, en fonctionnement, dans un état bloqué par le contrôleur 15. Ainsi, selon une variante de l'invention non illustrée, il est parfaitement envisageable que le dispositif de conversion soit dépourvu de premier et deuxième interrupteurs. Selon cette variante, la première borne basse tension 26 et la première borne haute tension 30 sont dépourvues de connexion entre elles. De la même manière et selon cette même variante, la deuxième borne basse tension 28 et la deuxième borne haute tension 32 sont également dépourvues de connexion entre elles.

Le contrôleur 15 commande également le premier interrupteur 20 et le deuxième interrupteur 22 pour qu'ils soient dans un état bloqué.

En outre, le contrôleur 15 pilote les modules de commutation 38 du convertisseur DC-DC 12 selon une loi de commande de convertisseur boost connue pour transférer de l'énergie électrique depuis la batterie 6 vers la branche haute tension 18. Le contrôleur 15 pilote également le convertisseur réversible DC-AC 14 selon une loi de commande d'onduleur pour transférer de l'énergie depuis la branche haute tension 18 vers le réseau de distribution 10.

En outre, le contrôleur 15 commande chaque commutateur 95 pour que chaque branche 82 du filtre actif 70 soit déconnectée du réseau de distribution 10.

Lors d'une étape de charge rapide, durant laquelle de l'énergie doit être transférée depuis toutes les phases 64 du réseau de distribution 10 vers la batterie 6 pour charger la batterie 6, le contrôleur 15 commande les commutateurs 60 pour raccorder chaque point de connexion 58 du convertisseur réversible DC-AC 14 à une phase 64 correspondante du réseau de distribution 10.

Le contrôleur 15 commande également le premier interrupteur 20 et le deuxième interrupteur 22 pour qu'ils soient dans un état bloqué.

En outre, le contrôleur 15 pilote le convertisseur réversible DC-AC 14 selon une loi de commande de redresseur connue pour transférer de l'énergie depuis le réseau de distribution 10 vers la branche haute tension 18. Le contrôleur 15 pilote également les modules de commutation 38 du convertisseur DC-DC 12 selon une loi de commande de convertisseur buck connue pour transférer de l'énergie électrique depuis la branche haute tension 18 vers la batterie 6.

Lors d'une étape de charge lente, durant laquelle de l'énergie doit être transférée depuis au plus N-1 phases 64, par exemple deux phases 64, du réseau de distribution 10 vers la batterie 6 pour charger la batterie 6, le contrôleur 15 commande les commutateurs 60 pour raccorder les dites N-1 phases, par exemple les deux phases 64, au point de connexion 58 correspondant du convertisseur réversible DC-AC 14, dit « point de connexion actif ». Les autres points de connexion 58 du convertisseur réversible DC-AC 14 ne sont pas connectés. Dans ce cas, le nombre total N de phases est strictement supérieur à 1.

Le contrôleur 15 commande également le premier interrupteur 20 et le deuxième interrupteur 22 pour qu'ils soient dans un état bloqué, de sorte que le transformateur 24 est utilisé pour l'isolation galvanique.

En outre, le contrôleur 15 pilote le convertisseur réversible DC-AC 14 selon une loi de commande de redresseur ou de pont en H connue pour transférer de l'énergie depuis le réseau de distribution 10 vers la batterie 6.

En outre, le contrôleur 15 pilote les modules de commutation 38 du convertisseur DC-DC 12 selon une loi de commande de convertisseur buck configuré pour transférer de l'énergie électrique depuis la branche haute tension 18 vers la branche basse tension.16

En outre, le contrôleur 15 commande chaque commutateur 95 pour que chaque branche 82 du filtre actif 70 soit connectée au réseau de distribution 10.

Le contrôleur mesure également le courant électrique circulant dans chaque phase du réseau de distribution 10. En outre, le contrôleur 15 pilote chaque module de commutation 92 du filtre actif 70 pour injecter, dans chaque phase du réseau de distribution 10, un courant électrique dont la valeur au cours du temps dépend de la valeur mesurée des harmoniques du courant électrique circulant dans ladite phase, c'est-à-dire de la valeur mesurée de la distorsion du courant électrique circulant dans ladite phase.

Lors d'une étape de charge auxiliaire, durant laquelle de l'énergie électrique doit être transférée depuis la batterie 6 vers l'accumulateur 56, le contrôleur 15 commande le premier interrupteur 20 et le deuxième interrupteur 22 pour qu'ils soient dans un état bloqué.

En outre, le contrôleur 15 pilote les modules de commutation 38 du convertisseur DC-DC 12 et de la branche auxiliaire 50 selon une loi de commande de convertisseur buck connue pour transférer de l'énergie électrique depuis la batterie 6 vers l'accumulateur 56.

Grâce à une telle chaîne d'électrification 2, les effets potentiellement néfastes des harmoniques transportées par le réseau de distribution 10, notamment sur les composants de la chaîne d'électrification 2 et sur le rendement de la chaîne d'électrification, sont réduits.

Un deuxième mode de réalisation d'une chaîne d'électrification 102 selon l'invention est représenté sur la figure 2. La chaîne d'électrification 102 est notamment destinée à être embarquée à bord d'un véhicule électrique ou hybride préférentiellement du type à forte puissance, par exemple une voiture électrique ou hybride. En particulier, la chaîne d'électrification 2 est destinée à être embarquée à bord d'un véhicule comprenant au moins un premier moteur électrique 8 et un deuxième moteur électrique 108.

Dans ce cas, chacun parmi le premier moteur électrique 8 et le deuxième moteur électrique 108 forme un réseau alternatif distinct.

De tels véhicules sont dits à forte puissance, la puissance fournie par l'ensemble des moteurs électriques 8, 108 étant généralement supérieure 100 kW, par exemple comprise entre 100 kW et 250 kW.

La chaîne d'électrification 102 de la figure 2 diffère de la chaîne d'électrification 2 de la figure 1 en ce que chaque commutateur 95 est propre à être commandé pour raccorder sélectivement un point de connexion 90 correspondant du filtre actif soit à une phase correspondante du deuxième moteur 108, soit à une phase correspondante du réseau de distribution 10.

En outre, la chaîne d'électrification 102 de la figure 2 se distingue de la chaîne d'électrification 2 de la figure 1 en ce que la première borne 84 du filtre actif 70 est connectée à la première borne haute tension 30 du convertisseur DC-DC 12, et en ce que la deuxième borne 86 du filtre actif 70 est connectée à la deuxième borne haute tension 32 du convertisseur DC-DC 12.

Par exemple, la première borne 84 du filtre actif 70 est connectée à la première borne haute tension 30 du convertisseur DC-DC 12 par le biais d'un interrupteur 104.

Par exemple, la deuxième borne 86 du filtre actif 70 est connectée à la deuxième borne haute tension 32 du convertisseur DC-DC 12 par le biais d'un interrupteur 104.

Le fonctionnement de la chaîne d'électrification 102 va maintenant être décrit.

Lors de l'étape de traction, durant laquelle de l'énergie doit être transférée depuis la batterie 6 vers le moteur électrique 8 et vers le moteur 108, le contrôleur 15 commande :
- les commutateurs 60 pour raccorder chaque point de connexion 58 du convertisseur réversible DC-AC 14 à une phase 62 correspondante du premier moteur électrique 8 ; et
- les commutateurs 95 pour raccorder chaque point de connexion 90 du filtre actif 70 à une phase 106 correspondante du deuxième moteur électrique 108.

Le contrôleur 15 commande également le premier interrupteur 20 et le deuxième interrupteur 22 pour qu'ils soient dans un état bloqué.

Le contrôleur 15 commande également les interrupteurs 104 pour qu'ils soient dans un étant passant, c'est-à-dire pour que la première borne 84, respectivement la deuxième borne 86, du filtre actif 70 soit électriquement connectée à la première borne haute tension 30, respectivement la deuxième borne haute tension 32, du convertisseur DC-DC 12.

En outre, le contrôleur 15 pilote les modules de commutation 38 du convertisseur DC-DC 12 selon une loi de commande de convertisseur boost connue pour transférer de l'énergie électrique depuis la batterie 6 vers la branche haute tension 18.

Le contrôleur 15 pilote également le convertisseur réversible DC-AC 14 selon une loi de commande d'onduleur connue pour transférer de l'énergie depuis la branche haute tension 18 vers le premier moteur électrique 8.

Le contrôleur 15 pilote également le filtre actif 70 selon une loi de commande d'onduleur connue pour transférer de l'énergie depuis la branche haute tension 18 vers le deuxième moteur électrique 8. Ceci est rendu possible par le fait que le filtre actif 70 présente une architecture bidirectionnelle similaire à l'architecture du convertisseur réversible DC-AC 14.

Le fonctionnement de la chaîne d'électrification 102 lors de l'étape de restitution d'énergie diffère du fonctionnement de la chaîne d'électrification 2 uniquement en ce que le contrôleur commande :
- les interrupteurs 104 pour qu'ils soient dans un état bloqué, c'est-à-dire pour que la première borne 84, respectivement la deuxième borne 86, du filtre actif 70 soit électriquement déconnectée de la première borne haute tension 30, respectivement la deuxième borne haute tension 32, du convertisseur DC-DC 12 ; et
- les commutateurs 95 pour que les points de connexion 90 du filtre actif 70 ne soient pas connectés au réseau de distribution 10.

En outre, pour chacune des étapes de charge rapide, de charge lente et de charge auxiliaire, le fonctionnement de la chaîne d'électrification 102 est similaire au fonctionnement de la chaîne d'électrification 2 durant l'étape considérée.

En particulier, pour chacune des étapes de charge rapide, de charge lente et de charge auxiliaire, le contrôleur 15 dans la chaîne d'électrification 102 commande :
- les interrupteurs 104 pour qu'ils soient dans un état bloqué ; et
- les commutateurs 95 pour raccorder chaque point de connexion 90 du filtre actif 70 à la phase 64 correspondante du réseau de distribution 10.

Il est évident que les fonctions réalisées par le contrôleur 15 sont susceptibles d'être réalisées par une pluralité d'unités de contrôle distinctes, lesdites unités de contrôle formant alors le contrôleur 15.

Dans l'ensemble des modes de réalisation décrits ci-dessus le dispositif de conversion 4 comporte un premier et un deuxième interrupteur 20, 22. Néanmoins, de tels interrupteurs 20, 22 ne sont pas nécessaires pour le fonctionnement du dispositif de conversion 4 selon l'invention puisque ceux-ci sont maintenus, en fonctionnement, dans un état bloqué par le contrôleur 15. Ainsi, selon une variante de l'invention non illustrée, il est parfaitement envisageable que le dispositif de conversion soit dépourvu de premier et deuxième interrupteurs. Selon cette variante, la première borne basse tension 26 et la première borne haute tension 30 sont dépourvues de connexion entre elles. De la même manière et selon cette même variante, la deuxième borne basse tension 28 et la deuxième borne haute tension 32 sont également dépourvues de connexion entre elles.

## Revendications

1. Dispositif de conversion (4) pour véhicule électrique, destiné à transférer de l'énergie électrique entre un réseau continu (6) et au moins un réseau alternatif (8, 10, 108) à N phases, N étant un entier supérieur ou égal à 1,
le dispositif de conversion (4) comportant :
- un convertisseur DC-DC (12) comprenant :
- une branche basse tension (16) connectée entre une première borne basse tension (26) et une deuxième borne basse tension (28), et une branche haute tension (18) connectée entre une première borne haute tension (30) et une deuxième borne haute tension (32), chacune parmi la branche basse tension (16) et la branche haute tension (18) comprenant deux sous-branches (34) en série connectées entre elles en un point milieu (361, 362), chaque sous-branche (34) comprenant un module de commutation (38) ;
- un transformateur (24) comprenant un enroulement primaire (44) et au moins un enroulement secondaire (46, 52) magnétiquement couplés entre eux, l'enroulement primaire (44) étant connecté, par l'une de ses extrémités, au point milieu (361) de la branche basse tension (16), et par l'autre de ses extrémités à une référence de tension primaire, et l'enroulement secondaire (46) étant connecté, par l'une de ses extrémités, au point milieu (362) de la branche haute tension (18), et par l'autre de ses extrémités à une référence de tension secondaire ;
- un convertisseur réversible DC-AC (14) connecté d'une part à la première borne haute tension (30) et à la deuxième borne haute tension (32) du convertisseur DC-DC (12), comportant N points de connexion (58) chacun propres à être raccordé à une phase correspondante du réseau alternatif (8, 10, 108) ;
- un filtre actif (70) comportant N points de connexion (90) chacun propres à être raccordé à une phase correspondante (62, 64) du réseau alternatif (8, 10, 108), une première borne (84) et une deuxième borne (86), la première borne (84), respectivement la deuxième borne (86), du filtre actif (70) étant connectée à la première borne haute tension (30), respectivement la deuxième borne haute tension (32), du convertisseur DC-DC (12) par le biais d'un interrupteur (104) respectif, le filtre actif (70) comportant, en outre, N branches (82), chaque branche (82) étant connectée entre la première borne (84) et la deuxième borne (86), chaque branche (82) comprenant deux sous-branches (88) en série et connectées entre elles en un point de connexion (90) correspondant du filtre actif (70), chaque sous-branche (88) comportant un module de commutation (92) propre à être commandé pour commuter entre un état bloqué empêchant la circulation d'un courant électrique, et un état passant permettant la circulation d'un courant électrique ;
- un contrôleur (15) configuré pour piloter l'état passant ou bloqué de chaque module de commutation (38) du convertisseur DC-DC (12),
le contrôleur (15) étant, en outre, configuré pour piloter le convertisseur réversible DC-AC (14) pour transférer de l'énergie électrique depuis le convertisseur DC-DC (12) vers le réseau alternatif (8, 10, 108), ou depuis le réseau alternatif (10) vers le convertisseur DC-DC (12),
le contrôleur (15) étant, en outre, configuré pour mesurer un courant électrique circulant dans chaque phase (64) du réseau alternatif (10), et pour piloter le filtre actif (70) afin de fournir, au niveau de chaque point de connexion (90) du filtre actif (70), de l'énergie électrique qui est fonction de la mesure du courant électrique circulant dans une phase (64) correspondante du réseau alternatif (10),
le dispositif de conversion (4) étant **caractérisé en ce que** le contrôleur (15) est configuré pour, lors d'une étape de traction :
- commander chaque interrupteur (104) pour qu'il soit dans un état passant, de façon à connecter la première borne (84) du filtre actif (70) à la première borne haute tension (30) du convertisseur DC-DC (12), et à connecter la deuxième borne (86) du filtre actif (70) à la deuxième borne haute tension (32) du convertisseur DC-DC (12) ;
- piloter les modules de commutation (38) du convertisseur DC-DC (12) selon une loi de commande de convertisseur boost configuré pour transférer de l'énergie électrique depuis la branche basse tension (16) vers la branche haute tension (18) ;
- piloter le convertisseur réversible DC-AC (14) selon une loi de commande d'onduleur configuré pour transférer de l'énergie depuis la branche haute tension (18) vers les points de connexion (58) du convertisseur réversible DC-AC (14) ;
- piloter le filtre actif (70) selon une loi de commande d'onduleur configuré pour transférer de l'énergie depuis la branche haute tension (18) vers les points de connexion (90) du filtre actif (70).

2. Dispositif de conversion (4) selon la revendication 1, dans lequel, lors d'une étape de charge dite rapide durant laquelle chaque point de connexion (58) du convertisseur réversible DC-AC (14) est propre à recevoir de l'énergie électrique depuis le réseau alternatif (10), le contrôleur (15) est configuré pour commander chaque interrupteur (104) pour qu'il soit dans un état bloqué, de façon à déconnecter la première borne (84) du filtre actif (70) de la première borne haute tension (30) du convertisseur DC-DC (12), et à déconnecter la deuxième borne (86) du filtre actif (70) de la deuxième borne haute tension (32) du convertisseur DC-DC (12),
et dans lequel le contrôleur (15) est également configuré pour, lors de l'étape de charge dite rapide:
- piloter le convertisseur réversible DC-AC (14) selon une loi de commande de redresseur configuré pour transférer de l'énergie depuis les points de connexion (58) du convertisseur réversible DC-AC (14) vers la branche haute tension (18) ;
- piloter les modules de commutation (38) du convertisseur DC-DC (12) selon une loi de commande de convertisseur buck configuré pour transférer de l'énergie électrique depuis la branche haute tension (18) vers la branche basse tension (16) ;
- mesurer un courant électrique circulant dans chaque phase (64) du réseau alternatif (10) ;
- piloter le filtre actif (70) afin de fournir, au niveau de chaque point de connexion (90) du filtre actif (70), de l'énergie électrique présentant des caractéristiques qui dépendent de la mesure du courant électrique circulant dans une phase (64) associée du réseau alternatif (10) de manière à réduire une distorsion dudit courant électrique circulant dans ladite phase (64).

3. Dispositif de conversion (4) selon la revendication 1 ou 2, dans lequel, lors d'une étape de charge dite lente durant laquelle au plus N-1 points de connexion (58) actifs du convertisseur réversible DC-AC (14) sont propres à recevoir de l'énergie électrique depuis le réseau alternatif (10), N étant un entier supérieur ou égal à 2, le contrôleur (15) est configuré pour commander chaque interrupteur (104) pour qu'il soit dans un état bloqué, de façon à déconnecter la première borne (84) du filtre actif (70) de la première borne haute tension (30) du convertisseur DC-DC (12), et à déconnecter la deuxième borne (86) du filtre actif (70) de la deuxième borne haute tension (32) du convertisseur DC-DC (12),
et dans lequel le contrôleur (15) est également configuré pour, lors de l'étape de charge dite lente:
- piloter le convertisseur réversible DC-AC (14) selon une loi de commande d'un redresseur configuré pour transférer de l'énergie depuis les points de connexion (58) actifs du convertisseur réversible DC-AC (14) vers la branche haute tension (18) ;
- piloter les modules de commutation (38) du convertisseur DC-DC (12) selon une loi de commande de convertisseur buck configuré pour transférer de l'énergie électrique depuis la branche haute tension (18) vers la branche basse tension (16) ;
- mesurer un courant électrique circulant dans chaque phase (64) du réseau alternatif (10) associée à un point de connexion (58) actif;
- piloter le filtre actif (70) afin de fournir, au niveau de chaque point de connexion (90) du filtre actif (70) qui est associé à une phase (64) du réseau alternatif (10) à laquelle correspond un point de connexion (58) actif, de l'énergie électrique présentant des caractéristiques qui dépendent de la mesure du courant électrique circulant dans la phase (64) correspondante du réseau alternatif (10) de manière à réduire une distorsion dudit courant électrique circulant dans ladite phase (64).

4. Dispositif de conversion (4) selon l'une quelconque des revendications 1 à 3, comportant en outre un premier interrupteur (20) connecté entre la première borne basse tension (26) et la première borne haute tension (30), et un deuxième interrupteur (22) connecté entre la deuxième borne basse tension (28) et la deuxième borne haute tension (32) et dans lequel le contrôleur (15) est en outre configuré pour piloter l'état passant ou bloqué du premier interrupteur (20) et du deuxième interrupteur (22), le contrôleur (15) étant en outre configuré pour commander le premier interrupteur (20) et le deuxième interrupteur (22) pour qu'ils soient dans un état bloqué lors de l'étape de traction, lors d'une étape de charge dite rapide durant laquelle chaque point de connexion (58) du convertisseur réversible DC-AC (14) est propre à recevoir de l'énergie électrique depuis le réseau alternatif (10), ou lors d'une étape de charge dite lente durant laquelle au plus N-1 points de connexion (58) actifs du convertisseur réversible DC-AC (14) sont propres à recevoir de l'énergie électrique depuis le réseau alternatif (10), N étant un entier supérieur ou égal à 2.

5. Procédé de commande d'un dispositif de conversion (4) selon l'une quelconque des revendications 1 à 4, le convertisseur DC-DC (12) étant relié à un réseau continu (6) par la première borne basse tension (26) et par la deuxième borne basse tension (28), le procédé comportant, lors de l'étape de traction :
- raccordement de chaque point de connexion (58) du convertisseur réversible DC-AC (14) à une phase correspondante d'un moteur électrique (8) ;
- pilotage des modules de commutation (38) du convertisseur DC-DC (12) selon une loi de commande de convertisseur boost pour transférer de l'énergie électrique depuis le réseau continu (6) vers la branche haute tension (18) ;
- pilotage du convertisseur réversible DC-AC (14) selon une loi de commande d'onduleur pour transférer de l'énergie depuis la branche haute tension (18) vers le moteur électrique (8) ;
le procédé de commande étant **caractérisé en ce qu'**il comporte, en outre, lors de l'étape de traction :
- commande des interrupteurs (104) pour qu'ils soient dans un état passant de façon à connecter la première borne (84) du filtre actif (70) à la première borne haute tension (30) du convertisseur DC-DC (12), et la deuxième borne (86) du filtre actif (70) à la deuxième borne haute tension (32) du convertisseur DC-DC (12) pour recevoir de l'énergie électrique depuis le convertisseur DC-DC (12) ;
- raccordement de chaque point de connexion (90) du filtre actif (70) à une phase correspondante d'un deuxième moteur électrique (108) ;
- commande des interrupteurs (104) pour qu'ils soient dans un état passant de façon à connecter la première borne (84) du filtre actif (70) à la première borne haute tension (30) du convertisseur DC-DC (12), et la deuxième borne (86) du filtre actif (70) à la deuxième borne haute tension (32) du convertisseur DC-DC (12) pour recevoir de l'énergie électrique depuis le convertisseur DC-DC (12) ;
- pilotage du filtre actif (70) selon une loi de commande d'onduleur pour transférer de l'énergie depuis la branche haute tension (18) vers le deuxième moteur électrique (108).

6. Procédé selon la revendication 5, comportant, lors d'une étape de charge dite rapide :
- raccordement de chaque point de connexion (58) du convertisseur réversible DC-AC (14) à une phase correspondante d'un réseau alternatif (10) ;
- pilotage du convertisseur réversible DC-AC (14) selon une loi de commande de redresseur pour transférer de l'énergie depuis le réseau alternatif (10) vers la branche haute tension (18) ;
- pilotage des modules de commutation (38) du convertisseur DC-DC (12) selon une loi de commande de convertisseur buck pour transférer de l'énergie électrique depuis la branche haute tension (18) vers le réseau continu (6) ;
- commande des interrupteurs (104) pour qu'ils soient dans un état bloqué de sorte que la première borne (84) du filtre actif (70) soit déconnectée de la première borne haute tension (30) du convertisseur DC-DC (12), et la deuxième borne (86) du filtre actif (70) déconnectée de la deuxième borne haute tension (32) du convertisseur DC-DC (12) ;
- raccordement de chaque point de connexion (90) du filtre actif (70) à une phase correspondante (64) du réseau alternatif (10) ;
- mesure d'un courant électrique circulant dans chaque phase (64) du réseau alternatif (10) ;
- pilotage du filtre actif (70) pour injecter, dans chaque phase (64) du réseau alternatif (10), par le point de connexion (90) correspondant, un courant électrique en fonction de la mesure du courant électrique circulant dans ladite phase (64) de manière à réduire une distorsion dudit courant électrique circulant dans ladite phase (64).

7. Procédé selon l'une quelconque des revendications 5 ou 6, comportant, lors d'une étape de charge dite lente:
- raccordement de N-1 points de connexion (58) actifs du convertisseur réversible DC-AC (14) à des phases correspondantes d'un réseau alternatif (10), N étant un entier supérieur ou égal à 2 ;
- commande des interrupteurs (104) pour qu'ils soient dans un état bloqué de sorte que la première borne (84) du filtre actif (70) soit déconnectée de la première borne haute tension (30) du convertisseur DC-DC (12), et la deuxième borne (86) du filtre actif (70) déconnectée de la deuxième borne haute tension (32) du convertisseur DC-DC (12) ;
- pilotage du convertisseur réversible DC-AC (14) selon une loi de commande de pont en H pour transférer de l'énergie depuis le réseau alternatif (10) vers le réseau continu (6) ;
- pour chaque phase (64) du réseau alternatif (10) à laquelle est raccordé un point de connexion (58) actif du convertisseur réversible DC-AC (14), raccordement d'un point de connexion (90) correspondant du filtre actif (70) ;
- piloter les modules de commutation (38) du convertisseur DC-DC (12) selon une loi de commande de convertisseur buck configuré pour transférer de l'énergie électrique depuis la branche haute tension (18) vers la branche basse tension (16) ;
- mesure d'un courant électrique circulant dans chaque phase (64) du réseau alternatif (10) à laquelle est raccordé un point de connexion (90) correspondant du filtre actif (70) ;
- dans chaque phase (64) à laquelle est raccordé un point de connexion (90) correspondant du filtre actif (70), pilotage du filtre actif (70) pour injecter, dans ladite phase (64), par le point de connexion (90) correspondant, un courant électrique en fonction de la mesure du courant électrique circulant dans ladite phase (64) de manière à réduire une distorsion dudit courant électrique circulant dans ladite phase (64).

8. Véhicule électrique ou hybride comportant une batterie (6), un moteur électrique (8) et un dispositif de conversion (4) selon l'une quelconque des revendications 1 à 4, le convertisseur DC-DC (12) étant relié à la batterie (6) par la première borne basse tension (26) et par la deuxième borne basse tension (28), chaque point de connexion (58) du convertisseur réversible DC-AC (14) étant adapté pour être raccordé à une phase correspondante du moteur électrique (8).

9. Véhicule électrique ou hybride selon la revendication 8, le véhicule comportant un deuxième moteur électrique (108), chaque point de connexion (90) du filtre actif (70) étant adapté pour être raccordé à une phase correspondante du deuxième moteur électrique (108).

## Patentansprüche

1. Umwandlungsvorrichtung (4) für ein Elektrofahrzeug, die dazu bestimmt ist, elektrische Energie zwischen einem Gleichstromnetz (6) und mindestens einem Wechselstromnetz (8, 10, 108) mit N Phasen, wobei N eine ganze Zahl größer als oder gleich 1 ist, zu übertragen,
wobei die Umwandlungsvorrichtung (4) Folgendes umfasst:
- einen DC-DC-Wandler (12), der Folgendes beinhaltet:
- einen Niederspannungszweig (16), der zwischen einer ersten Niederspannungsklemme (26) und einer zweiten Niederspannungsklemme (28) verbunden ist, und einen Hochspannungszweig (18), der zwischen einer ersten Hochspannungsklemme (30) und einer zweiten Hochspannungsklemme (32) verbunden ist, wobei jeder von dem Niederspannungszweig (16) und dem Hochspannungszweig (18) zwei Unterzweige (34) in Reihe beinhaltet, die in einem Mittelpunkt (361, 362) untereinander verbunden sind, wobei jeder Unterzweig (34) ein Umschaltmodul (38) beinhaltet;
- einen Transformator (24), der eine Primärwicklung (44) und mindestens eine Sekundärwicklung (46, 52) beinhaltet, die untereinander magnetisch gekoppelt sind, wobei die Primärwicklung (44) durch eines ihrer Enden mit dem Mittelpunkt (361) des Niederspannungszweigs (16) und durch das andere ihrer Enden mit einer Primärspannungsreferenz verbunden ist und die Sekundärwicklung (46) durch eines ihrer Enden mit dem Mittelpunkt (362) des Hochspannungszweigs (18) und durch das andere ihrer Enden mit einer Sekundärspannungsreferenz verbunden ist;
- einen reversiblen DC-AC-Wandler (14), der einerseits mit der ersten Hochspannungsklemme (30) und der zweiten Hochspannungsklemme (32) des DC-DC-Wandlers (12) verbunden ist und der N Verbindungspunkte (58) umfasst, die jeweils dazu geeignet sind, an eine entsprechende Phase des Wechselstromnetzes (8, 10, 108) angeschlossen zu sein;
- ein aktives Filter (70), das N Verbindungspunkte (90), die jeweils dazu geeignet sind, an eine entsprechende Phase (62, 64) des Wechselstromnetzes (8, 10, 108) angeschlossen zu sein, eine erste Klemme (84) und eine zweite Klemme (86) umfasst, wobei die erste Klemme (84) bzw. die zweite Klemme (86) des aktiven Filters (70) über einen jeweiligen Schalter (104) mit der ersten Hochspannungsklemme (30) bzw. der zweiten Hochspannungsklemme (32) des DC-DC-Wandlers (12) verbunden sind, wobei das aktive Filter (70) ferner N Zweige (82) umfasst, wobei jeder Zweig (82) zwischen der ersten Klemme (84) und der zweiten Klemme (86) verbunden ist, wobei jeder Zweig (82) zwei Unterzweige (88) in Reihe beinhaltet, die in einem entsprechenden Verbindungspunkt (90) des aktiven Filters (70) untereinander verbunden sind, wobei jeder Unterzweig (88) ein Umschaltmodul (92) umfasst, das dazu geeignet ist, gesteuert zu werden, um zwischen einem gesperrten Zustand, der das Fließen eines elektrischen Stroms verhindert, und einem durchgeschalteten Zustand, der das Fließen eines elektrischen Stroms gestattet, umzuschalten;
- eine Steuereinheit (15), die dazu konfiguriert ist, den durchgeschalteten oder den gesperrten Zustand jedes Umschaltmoduls (38) des DC-DC-Wandlers (12) anzusteuern, wobei die Steuereinheit (15) ferner dazu konfiguriert ist, den reversiblen DC-AC-Wandler (14) anzusteuern, um elektrische Energie von dem DC-DC-Wandler (12) zu dem Wechselstromnetz (8, 10, 108) oder von dem Wechselstromnetz (10) zu dem DC-DC-Wandler (12) zu übertragen,
wobei die Steuereinheit (15) ferner dazu konfiguriert ist, einen elektrischen Strom, der in jeder Phase (64) des Wechselstromnetzes (10) fließt, zu messen und das aktive Filter (70) anzusteuern, um an jedem Verbindungspunkt (90) des aktiven Filters (70) elektrische Energie bereitzustellen, die von der Messung des elektrischen Stroms, der in einer entsprechenden Phase (64) des Wechselstromnetzes (10) fließt, abhängig ist,
wobei die Umwandlungsvorrichtung (4) **dadurch gekennzeichnet ist, dass** die Steuereinheit (15) während eines Antriebsschritts zu Folgendem konfiguriert ist:
- Steuern jedes Schalters (104), damit sich dieser in einem durchgeschalteten Zustand befindet, um die erste Klemme (84) des aktiven Filters (70) mit der ersten Hochspannungsklemme (30) des DC-DC-Wandlers (12) zu verbinden und die zweite Klemme (86) des aktiven Filters (70) mit der zweiten Hochspannungsklemme (32) des DC-DC-Wandlers (12) zu verbinden;
- Ansteuern der Umschaltmodule (38) des DC-DC-Wandlers (12) gemäß einem Steuergesetz eines Aufwärtswandlers, der dazu konfiguriert ist, elektrische Energie von dem Niederspannungszweig (16) zu dem Hochspannungszweig (18) zu übertragen;
- Ansteuern des reversiblen DC-AC-Wandlers (14) gemäß einem Steuergesetz eines Wechselrichters, der dazu konfiguriert ist, Energie von dem Hochspannungszweig (18) zu den Verbindungspunkten (58) des reversiblen DC-AC-Wandlers (14) zu übertragen;
- Ansteuern des aktiven Filters (70) gemäß einem Steuergesetz eines Wechselrichters, der dazu konfiguriert ist, Energie von dem Hochspannungszweig (18) zu den Verbindungspunkten (90) des aktiven Filters (70) zu übertragen.

2. Umwandlungsvorrichtung (4) nach Anspruch 1, wobei während eines sogenannten Schnellladeschritts, während dessen jeder Verbindungspunkt (58) des reversiblen DC-AC-Wandlers (14) dazu geeignet ist, elektrische Energie von dem Wechselstromnetz (10) zu empfangen, die Steuereinheit (15) dazu konfiguriert ist, jeden Schalter (104) so zu steuern, dass sich dieser in einem gesperrten Zustand befindet, um die erste Klemme (84) des aktiven Filters (70) von der ersten Hochspannungsklemme (30) des DC-DC-Wandlers (12) zu trennen und die zweite Klemme (86) des aktiven Filters (70) von der zweiten Hochspannungsklemme (32) des DC-DC-Wandlers (12) zu trennen,
und wobei die Steuereinheit (15) während des sogenannten Schnellladeschritts ferner zu Folgendem konfiguriert ist:
- Ansteuern des reversiblen DC-AC-Wandlers (14) gemäß einem Steuergesetz eines Gleichrichters, der dazu konfiguriert ist, Energie von den Verbindungspunkten (58) des reversiblen DC-AC-Wandlers (14) zu dem Hochspannungszweig (18) zu übertragen;
- Ansteuern der Umschaltmodule (38) des DC-DC-Wandlers (12) gemäß einem Steuergesetz eines Abwärtswandlers, der dazu konfiguriert ist, elektrische Energie von dem Hochspannungszweig (18) zu dem Niederspannungszweig (16) zu übertragen;
- Messen eines elektrischen Stroms, der in jeder Phase (64) des Wechselstromnetzes (10) fließt;
- Ansteuern des aktiven Filters (70), um an jedem Verbindungspunkt (90) des aktiven Filters (70) elektrische Energie bereitzustellen, die Eigenschaften aufweist, die von der Messung des elektrischen Stroms, der in einer assoziierten Phase (64) des Wechselstromnetzes (10) fließt, abhängen, um eine Verzerrung des in der Phase (64) fließenden elektrischen Stroms zu verringern.

3. Umwandlungsvorrichtung (4) nach Anspruch 1 oder 2, wobei während eines sogenannten Langsamladeschritts, während dessen höchsten N-1 aktive Verbindungspunkte (58) des reversiblen DC-AC-Wandlers (14) dazu geeignet sind, elektrische Energie von dem Wechselstromnetz (10) zu empfangen, wobei N eine ganze Zahl größer als oder gleich 2 ist, die Steuereinheit (15) dazu konfiguriert ist, jeden Schalter (104) so zu steuern, dass sich dieser in einem gesperrten Zustand befindet, um die erste Klemme (84) des aktiven Filters (70) von der ersten Hochspannungsklemme (30) des DC-DC-Wandlers (12) zu trennen und die zweite Klemme (86) des aktiven Filters (70) von der zweiten Hochspannungsklemme (32) des DC-DC-Wandlers (12) zu trennen,
und wobei die Steuereinheit (15) während des sogenannten Langsamladeschritts ferner zu Folgendem konfiguriert ist:
- Ansteuern des reversiblen DC-AC-Wandlers (14) gemäß einem Steuergesetz eines Gleichrichters, der dazu konfiguriert ist, Energie von den aktiven Verbindungspunkten (58) des reversiblen DC-AC-Wandlers (14) zu dem Hochspannungszweig (18) zu übertragen;
- Ansteuern der Umschaltmodule (38) des DC-DC-Wandlers (12) gemäß einem Steuergesetz eines Abwärtswandlers, der dazu konfiguriert ist, elektrische Energie von dem Hochspannungszweig (18) zu dem Niederspannungszweig (16) zu übertragen;
- Messen eines elektrischen Stroms, der in jeder Phase (64) des Wechselstromnetzes (10), die mit einem aktiven Verbindungspunkt (58) assoziiert ist, fließt;
- Ansteuern des aktiven Filters (70), um an jedem Verbindungspunkt (90) des aktiven Filters (70), der mit einer Phase (64) des Wechselstromnetzes (10), welcher ein aktiver Verbindungspunkt (58) entspricht, assoziiert ist, elektrische Energie bereitzustellen, die Eigenschaften aufweist, die von der Messung des elektrischen Stroms, der in der entsprechenden Phase (64) des Wechselstromnetzes (10) fließt, abhängen, um eine Verzerrung des in der Phase (64) fließenden elektrischen Stroms zu verringern.

4. Umwandlungsvorrichtung (4) nach einem der Ansprüche 1 bis 3, ferner umfassend einen ersten Schalter (20), der zwischen der ersten Niederspannungsklemme (26) und der ersten Hochspannungsklemme (30) verbunden ist, und einen zweiten Schalter (22), der zwischen der zweiten Niederspannungsklemme (28) und der zweiten Hochspannungsklemme (32) verbunden ist, und wobei die Steuereinheit (15) ferner dazu konfiguriert ist, den durchgeschalteten oder den gesperrten Zustand des ersten Schalters (20) und des zweiten Schalters (22) anzusteuern, wobei die Steuereinheit (15) ferner dazu konfiguriert ist, den ersten Schalter (20) und den zweiten Schalter (22) so zu steuern, dass sich diese während des Antriebsschritts, während eines sogenannten Schnellladeschritts, während dessen jeder Verbindungspunkt (58) des reversiblen DC-AC-Wandlers (14) dazu geeignet ist, elektrische Energie von dem Wechselstromnetz (10) zu empfangen, oder während eines sogenannten Langsamladeschritts, während dessen höchstens N-1 aktive Verbindungspunkte (58) des reversiblen DC-AC-Wandlers (14) dazu geeignet sind, elektrische Energie von dem Wechselstromnetz (10) zu empfangen, wobei N eine ganze Zahl größer als oder gleich 2 ist, in einem gesperrten Zustand befinden.

5. Verfahren zur Steuerung einer Umwandlungsvorrichtung (4) nach einem der Ansprüche 1 bis 4, wobei der DC-DC-Wandler (12) über die erste Niederspannungsklemme (26) und über die zweite Niederspannungsklemme (28) an ein Gleichstromnetz (6) angeschlossen ist, wobei das Verfahren während des Antriebsschritts Folgendes umfasst:
- Anschließen jedes Verbindungspunkts (58) des reversiblen DC-AC-Wandlers (14) an eine entsprechende Phase eines Elektromotors (8);
- Ansteuern der Umschaltmodule (38) des DC-DC-Wandlers (12) gemäß einem Steuergesetz eines Aufwärtswandlers, um elektrische Energie von dem Gleichstromnetz (6) zu dem Hochspannungszweig (18) zu übertragen;
- Ansteuern des reversiblen DC-AC-Wandlers (14) gemäß einem Steuergesetz eines Wechselrichters, um Energie von dem Hochspannungszweig (18) zu dem Elektromotor (8) zu übertragen;
wobei das Steuerverfahren **dadurch gekennzeichnet ist, dass** es während des Antriebsschritts ferner Folgendes umfasst:
- Steuern der Schalter (104), damit sich diese in einem durchgeschalteten Zustand befinden, um die erste Klemme (84) des aktiven Filters (70) mit der ersten Hochspannungsklemme (30) des DC-DC-Wandlers (12) zu verbinden und die zweite Klemme (86) des aktiven Filters (70) mit der zweiten Hochspannungsklemme (32) des DC-DC-Wandlers (12) zu verbinden, um elektrische Energie von dem DC-DC-Wandler (12) zu empfangen;
- Anschließen jedes Verbindungspunkts (90) des aktiven Filters (70) an eine entsprechende Phase eines zweiten Elektromotors (108);
- Steuern der Schalter (104), damit sich diese in einem durchgeschalteten Zustand befinden, um die erste Klemme (84) des aktiven Filters (70) mit der ersten Hochspannungsklemme (30) des DC-DC-Wandlers (12) zu verbinden und die zweite Klemme (86) des aktiven Filters (70) mit der zweiten Hochspannungsklemme (32) des DC-DC-Wandlers (12) zu verbinden, um elektrische Energie von dem DC-DC-Wandler (12) zu empfangen;
- Ansteuern des aktiven Filters (70) gemäß einem Steuergesetz eines Wechselrichters, um Energie von dem Hochspannungszweig (18) zu dem zweiten Elektromotor (108) zu übertragen.

6. Verfahren nach Anspruch 5, das während eines sogenannten Schnellladeschritts Folgendes umfasst:
- Anschließen jedes Verbindungspunkts (58) des reversiblen DC-AC-Wandlers (14) an eine entsprechende Phase eines Wechselstromnetzes (10);
- Ansteuern des reversiblen DC-AC-Wandlers (14) gemäß einem Steuergesetz eines Gleichrichters, um Energie von dem Wechselstromnetz (10) zu dem Hochspannungszweig (18) zu übertragen;
- Ansteuern der Umschaltmodule (38) des DC-DC-Wandlers (12) gemäß einem Steuergesetz eines Abwärtswandlers, um elektrische Energie von dem Hochspannungszweig (18) zu dem Gleichstromnetz (6) zu übertragen;
- Steuern der Schalter (104), damit sich diese in einem gesperrten Zustand befinden, sodass die erste Klemme (84) des aktiven Filters (70) von der ersten Hochspannungsklemme (30) des DC-DC-Wandlers (12) getrennt ist und die zweite Klemme (86) des aktiven Filters (70) von der zweiten Hochspannungsklemme (32) des DC-DC-Wandlers (12) getrennt ist;
- Anschließen jedes Verbindungspunkts (90) des aktiven Filters (70) an eine entsprechende Phase (64) des Wechselstromnetzes (10);
- Messen eines elektrischen Stroms, der in jeder Phase (64) des Wechselstromnetzes (10) fließt;
- Ansteuern des aktiven Filters (70), um in jede Phase (64) des Wechselstromnetzes (10) über den entsprechenden Verbindungspunkt (90) einen elektrischen Strom, der von der Messung des in der Phase (64) fließenden elektrischen Stroms abhängig ist, einzuleiten, um eine Verzerrung des in der Phase (64) fließenden elektrischen Stroms zu verringern.

7. Verfahren nach einem der Ansprüche 5 oder 6, das während eines sogenannten Langsamladeschritts Folgendes umfasst:
- Anschließen von N-1 aktiven Verbindungspunkten (58) des reversiblen DC-AC-Wandlers (14) an entsprechende Phasen eines Wechselstromnetzes (10), wobei N eine ganze Zahl größer als oder gleich 2 ist;
- Steuern der Schalter (104), damit sich diese in einem gesperrten Zustand befinden, sodass die erste Klemme (84) des aktiven Filters (70) von der ersten Hochspannungsklemme (30) des DC-DC-Wandlers (12) getrennt ist und die zweite Klemme (86) des aktiven Filters (70) von der zweiten Hochspannungsklemme (32) des DC-DC-Wandlers (12) getrennt ist;
- Ansteuern des reversiblen DC-AC-Wandlers (14) gemäß einem Steuergesetz einer H-Brücke, um Energie von dem Wechselstromnetz (10) zu dem Gleichstromnetz (6) zu übertragen;
- für jede Phase (64) des Wechselstromnetzes (10), an die ein aktiver Verbindungspunkt (58) des reversiblen DC-AC-Wandlers (14) angeschlossen ist, Anschließen eines entsprechenden Verbindungspunkts (90) des aktiven Filters (70);
- Ansteuern der Umschaltmodule (38) des DC-DC-Wandlers (12) gemäß einem Steuergesetz eines Abwärtswandlers, der dazu konfiguriert ist, elektrische Energie von dem Hochspannungszweig (18) zu dem Niederspannungszweig (16) zu übertragen;
- Messen eines elektrischen Stroms, der in jeder Phase (64) des Wechselstromnetzes (10), an die ein entsprechender Verbindungspunkt (90) des aktiven Filters (70) angeschlossen ist, fließt;
- in jeder Phase (64), an die ein entsprechender Verbindungspunkt (90) des aktiven Filters (70) angeschlossen ist, Ansteuern des aktiven Filters (70), um in die Phase (64) über den entsprechenden Verbindungspunkt (90) einen elektrischen Strom, der von der Messung des in der Phase (64) fließenden elektrischen Stroms abhängig ist, einzuleiten, um eine Verzerrung des in der Phase (64) fließenden elektrischen Stroms zu verringern.

8. Elektro- oder Hybridfahrzeug, das eine Batterie (6), einen Elektromotor (8) und eine Umwandlungsvorrichtung (4) nach einem der Ansprüche 1 bis 4 umfasst, wobei der DC-DC-Wandler (12) über die erste Niederspannungsklemme (26) und über die zweite Niederspannungsklemme (28) an die Batterie (6) angeschlossen ist, wobei jeder Verbindungspunkt (58) des reversiblen DC-AC-Wandlers (14) dazu angepasst ist, an eine entsprechende Phase des Elektromotors (8) angeschlossen zu sein.

9. Elektro- oder Hybridfahrzeug nach Anspruch 8, wobei das Fahrzeug einen zweiten Elektromotor (108) umfasst, wobei jeder Verbindungspunkt (90) des aktiven Filters (70) dazu angepasst ist, an eine entsprechende Phase des zweiten Elektromotors (108) angeschlossen zu sein.

## Claims

1. Converting device (4) for a motor vehicle, said device being intended to transfer electric power between a DC network (6) and at least one N-phase AC network or grid (8, 10, 108), N being an integer greater than or equal to 1, the converting device (4) comprising:
- a DC-DC converter (12) comprising:
- a low-voltage branch (16) connected between a first low-voltage terminal (26) and a second low-voltage terminal (28), and a high-voltage branch (18) connected between a first high-voltage terminal (30) and a second high-voltage terminal (32), each of the low-voltage branch (16) and the high-voltage branch (18) comprising two sub-branches (34) in series connected to each other at a midpoint (361, 362), each sub-branch (34) comprising a switching module (38);
- a transformer (24) comprising a primary winding (44) and at least one secondary winding (46, 52) coupled magnetically to each other, the primary winding (44) being connected, at one of its ends, to the midpoint (361) of the low-voltage branch (16), and at the other of its ends to a primary voltage reference, and the secondary winding (46) being connected, at one of its ends, to the midpoint (362) of the high-voltage branch (18), and at the other of its ends to a secondary voltage reference;
- a reversible DC-AC converter (14) connected to the first high-voltage terminal (30) and to the second high-voltage terminal (32) of the DC-DC converter (12), and comprising N connection points (58) each able to be connected to a corresponding phase of the AC network or grid (8, 10, 108);
- an active filter (70) comprising N connection points (90) each able to be connected to a corresponding phase (62, 64) of the AC network or grid (8, 10, 108), a first terminal (84) and a second terminal (86), the first terminal (84) and the second terminal (86) of the active filter (70) being connected to the first high-voltage terminal (30) and to the second high-voltage terminal (32) of the DC-DC converter (12), respectively, via a respective switch (104), the active filter (70) further comprising N branches (82), each branch (82) being connected between the first terminal (84) and the second terminal (86), each branch (82) comprising two sub-branches (88) in series and connected to each other at a corresponding connection point (90) of the active filter (70), each sub-branch (88) comprising a switching module (92) able to be controlled so as to switch between an off state preventing an electric current from flowing and an on state allowing an electric current to flow;
- a controller (15) configured to control each switching module (38) of the DC-DC converter (12) to the on or off state,
the controller (15) further being configured to control the reversible DC-AC converter (14) so as to transfer electric power from the DC-DC converter (12) to the AC network or grid (8, 10, 108), or from the AC grid (10) to the DC-DC converter (12),
the controller (15) further being configured to measure an electric current flowing through each phase (64) of the AC grid (10), and to control the active filter (70) in order to deliver, to each connection point (90) of the active filter (70), electric power depending on the measurement of the electric current flowing through a corresponding phase (64) of the AC grid (10),
the converting device (4) being **characterized in that** the controller (15) is configured to, in a traction step:
- control each switch (104) so that it is in an on state, so as to connect the first terminal (84) of the active filter (70) to the first high-voltage terminal (30) of the DC-DC converter (12), and to connect the second terminal (86) of the active filter (70) to the second high-voltage terminal (32) of the DC-DC converter (12);
- control the switching modules (38) of the DC-DC converter (12) according to a control law such as to achieve a boost converter configured to transfer electric power from the low-voltage branch (16) to the high-voltage branch (18);
- control the reversible DC-AC converter (14) according to a control law such as to achieve an inverter configured to transfer power from the high-voltage branch (18) to the connection points (58) of the reversible DC-AC converter (14);
- control the active filter (70) according to a control law such as to achieve an inverter configured to transfer power from the high-voltage branch (18) to the connection points (90) of the active filter (70).

2. Converting device (4) according to Claim 1, wherein, in what is referred to as a fast-charging step in which each connection point (58) of the reversible DC-AC converter (14) is able to receive electric power from the AC grid (10), the controller (15) is configured to control each switch (104) so that it is in an off state, so as to disconnect the first terminal (84) of the active filter (70) from the first high-voltage terminal (30) of the DC-DC converter (12), and to disconnect the second terminal (86) of the active filter (70) from the second high-voltage terminal (32) of the DC-DC converter (12),
and wherein the controller (15) is also configured to, in the step referred to as the fast-charging step:
- control the reversible DC-AC converter (14) according to a control law such as to achieve a rectifier configured to transfer power from the connection points (58) of the reversible DC-AC converter (14) to the high-voltage branch (18);
- control the switching modules (38) of the DC-DC converter (12) according to a control law such as to achieve a buck converter configured to transfer electric power from the high-voltage branch (18) to the low-voltage branch (16);
- measure an electric current flowing through each phase (64) of the AC grid (10);
- control the active filter (70) in order to deliver, to each connection point (90) of the active filter (70), electric power having properties that depend on the measurement of the electric current flowing through an associated phase (64) of the AC grid (10) so as to reduce distortion of said electric current flowing through said phase (64).

3. Converting device (4) according to Claim 1 or 2, wherein, in what is referred to as a slow-charging step during which at most N-1 active connection points (58) of the reversible DC-AC converter (14) are able to receive electric power from the AC grid (10), N being an integer greater than or equal to 2, the controller (15) is configured to control each switch (104) so that it is in an off state, so as to disconnect the first terminal (84) of the active filter (70) from the first high-voltage terminal (30) of the DC-DC converter (12), and to disconnect the second terminal (86) of the active filter (70) from the second high-voltage terminal (32) of the DC-DC converter (12),
and wherein the controller (15) is also configured to, in the step referred to as the slow-charging step:
- control the reversible DC-AC converter (14) according to a control law such as to achieve a rectifier configured to transfer power from the active connection points (58) of the reversible DC-AC converter (14) to the high-voltage branch (18);
- control the switching modules (38) of the DC-DC converter (12) according to a control law such as to achieve a buck converter configured to transfer electric power from the high-voltage branch (18) to the low-voltage branch (16);
- measure an electric current flowing through each phase (64), of the AC grid (10), associated with an active connection point (58);
- control the active filter (70) in order to deliver, to each connection point (90), of the active filter (70), that is associated with a phase (64), of the AC grid (10), to which an active connection point (58) corresponds, electric power having properties that depend on the measurement of the electric current flowing through the corresponding phase (64) of the AC grid (10) so as to reduce distortion of said electric current flowing through said phase (64).

4. Converting device (4) according to any one of Claims 1 to 3, further comprising a first switch (20) connected between the first low-voltage terminal (26) and the first high-voltage terminal (30), and a second switch (22) connected between the second low-voltage terminal (28) and the second high-voltage terminal (32) and wherein the controller (15) is further configured to control the on or off state of the first switch (20) and of the second switch (22), the controller (15) being further configured to control the first switch (20) and the second switch (22) so that they are in an off state in the traction step, in what is referred to as a fast-charging step during which each connection point (58) of the reversible DC-AC converter (14) is able to receive electric power from the AC grid (10), or in what is referred to as a slow-charging step during which at most N-1 active connection points (58) of the reversible DC-AC converter (14) are able to receive electric power from the AC grid (10), N being an integer greater than or equal to 2.

5. Control method for controlling a converting device (4) according to any one of Claims 1 to 4, the DC-DC converter (12) being connected to a DC network (6) via the first low-voltage terminal (26) and via the second low-voltage terminal (28), the method comprising, in the traction step:
- connecting each connection point (58) of the reversible DC-AC converter (14) to a corresponding phase of the electric motor (8);
- controlling the switching modules (38) of the DC-DC converter (12) according to a control law such as to achieve a boost converter for transferring electric power from the DC network (6) to the high-voltage branch (18);
- controlling the reversible DC-AC converter (14) according to a control law such as to achieve an inverter for transferring power from the high-voltage branch (18) to the electric motor (8);
the control method being **characterized in that** it further comprises, in the traction step:
- controlling the switches (104) so that they are in an on state so as to connect the first terminal (84) of the active filter (70) to the first high-voltage terminal (30) of the DC-DC converter (12), and the second terminal (86) of the active filter (70) to the second high-voltage terminal (32) of the DC-DC converter (12) so as to receive electric power from the DC-DC converter (12);
- connecting each connection point (90) of the active filter (70) to a corresponding phase of a second electric motor (108);
- controlling the switches (104) so that they are in an on state so as to connect the first terminal (84) of the active filter (70) to the first high-voltage terminal (30) of the DC-DC converter (12), and the second terminal (86) of the active filter (70) to the second high-voltage terminal (32) of the DC-DC converter (12) so as to receive electric power from the DC-DC converter (12);
- controlling the active filter (70) according to a control law such as to achieve an inverter for transferring power from the high-voltage branch (18) to the second electric motor (108).

6. Method according to Claim 5, comprising, in what is referred to as a fast-charging step:
- connecting each connection point (58) of the reversible DC-AC converter (14) to a corresponding phase of an AC grid (10);
- controlling the reversible DC-AC converter (14) according to a control law such as to achieve a rectifier for transferring power from the AC grid (10) to the high-voltage branch (18);
- controlling the switching modules (38) of the DC-DC converter (12) according to a control law such as to achieve a buck converter for transferring electric power from the high-voltage branch (18) to the DC network (6);
- controlling the switches (104) so that they are in an off state so that the first terminal (84) of the active filter (70) is disconnected from the first high-voltage terminal (30) of the DC-DC converter (12), and the second terminal (86) of the active filter (70) is disconnected from the second high-voltage terminal (32) of the DC-DC converter (12);
- connecting each connection point (90) of the active filter (70) to a corresponding phase (64) of the AC grid (10);
- measuring an electric current flowing through each phase (64) of the AC grid (10);
- controlling the active filter (70) so as to inject, into each phase (64) of the AC grid (10), via the corresponding connection point (90), an electric current depending on the measurement of the electric current flowing through said phase (64) so as to reduce distortion of said electric current flowing through said phase (64).

7. Method according to either one of Claims 5 and 6, comprising, in what is referred to as a slow-charging step:
- connecting N-1 active connection points (58) of the reversible DC-AC converter (14) to corresponding phases of an AC grid (10), N being an integer greater than or equal to 2;
- controlling the switches (104) so that they are in an off state so that the first terminal (84) of the active filter (70) is disconnected from the first high-voltage terminal (30) of the DC-DC converter (12), and the second terminal (86) of the active filter (70) is disconnected from the second high-voltage terminal (32) of the DC-DC converter (12);
- controlling the reversible DC-AC converter (14) according to a control law such as to achieve an H-bridge for transferring power from the AC grid (10) to the DC network (6);
- for each phase (64) of the AC grid (10) to which an active connection point (58) of the reversible DC-AC converter (14) is connected, connecting a corresponding connection point (90) of the active filter (70);
- controlling the switching modules (38) of the DC-DC converter (12) according to a control law such as to achieve a buck converter configured to transfer electric power from the high-voltage branch (18) to the low-voltage branch (16);
- measuring an electric current flowing through each phase (64) of the AC grid (10) to which a corresponding connection point (90) of the active filter (70) is connected;
- in each phase (64) to which a corresponding connection point (90) of the active filter (70) is connected, controlling the active filter (70) so as to inject, into said phase (64), via the corresponding connection point (90), an electric current depending on the measurement of the electric current flowing through said phase (64) so as to reduce distortion of said electric current flowing through said phase (64).

8. Electric or hybrid vehicle comprising a battery (6), an electric motor (8) and a converting device (4) according to any one of Claims 1 to 4, the DC-DC converter (12) being connected to the battery (6) via the first low-voltage terminal (26) and via the second low-voltage terminal (28), each connection point (58) of the reversible DC-AC converter (14) being able to be connected to a corresponding phase of the electric motor (8).

9. Electric or hybrid vehicle according to Claim 8, the vehicle comprising a second electric motor (108), each connection point (90) of the active filter (70) being able to be connected to a corresponding phase of the second electric motor (108).
